# EUROPEAN PATENT SPECIFICATION

(11) **EP 3 715 088 B1**
(45) Date of publication and mention of the grant of the patent: **27.07.2022**
(21) Application number: 20165931.5
(22) Date of filing: 26.03.2020
(51) Int. Cl.: B29C 45/76, B29C 45/84, B29C 45/17

(54) **MOLDING MACHINE AND COMPUTER PROGRAM**
FORMMASCHINE UND COMPUTERPROGRAMM
MACHINE DE MOULAGE ET PROGRAMME INFORMATIQUE

(30) Priority: 29.03.2019 JP 2019069423
(43) Date of publication of application: 30.09.2020
(73) Proprietor: Sumitomo Heavy Industries, Ltd., Tokyo 141-6025 (JP)
(72) Inventor: ISHII, Tsutomu, Chiba-shi, Chiba 263-0001 (JP); FUJIMOTO, Takeshi, Chiba-shi, Chiba 263-0001 (JP)
(74) Representative: Louis Pöhlau Lohrentz

(56) References cited:
- WO-A1-2011/050467
- WO-A1-2019/014749
- JP-A- H05 318 559
- US-A- 5 539 650
- US-A1- 2010 241 901
- US-A1- 2010 274 379
- US-A1- 2012 185 077
- US-A1- 2013 041 480
- "Selogica - the control unit for all ALLROUNDER injection moulding machines", 20020501, 1 May 2002 (2002-05-01), pages 1-31, XP002305034,

## Description

### BACKGROUND OF THE INVENTION

### Field of the Invention

The present disclosure relates to a molding machine and a computer program.

### Description of Related Art

Japanese Unexamined Patent Publication No. 2009-255592 discloses a mold space adjustment method that, at the time of mold replacement in a mold clamping unit of an injection molding machine, allows desired mold clamping force to be obtained even though molds different in thickness are attached.

Japanese Unexamined Patent Publication No. 2017-39216 discloses a system that supports injection molding of an injection molding machine.

United States Patent Publication No. 2013/041480 A1 discloses a method for representing on a display screen a program sequence for at least one machine with a cyclic machine operating sequence having a cycle time.

International Patent Publication No. WO 2019/014749 A1 discloses a system for programming a protection device for a molding machine.

International Patent Publication No. WO 2011/050467 A1 discloses a system for use in performance of injection molding operations, wherein the system can include a plurality of injection molding assembly components.

United States Patent Publication No. 2012/185077 A1 discloses a method for controlling and operating a production cell including at least a part of the peripheral equipment associated wherewith.

United States Patent Publication No. 2010/274379 A1 discloses that the operator enters the operating parameters that are required for the sequence of operations of the machine in a form serving to guide the operator.

United States Patent No. 5539650 discloses that the display device screen shows a plurality of symbols which indicate the sequence of operations of the machine, and the control unit gives the operator a selection of symbols that are appropriate at this particular point and which could take place as the next step.

United States Patent Publication No. 2010/241901 A1 discloses a method for checking a control program for controlling an industrial system, and to find faults during the parameterization.

### SUMMARY OF THE INVENTION

While an operation to attach a mold to the mold clamping unit of the injection molding machine should be performed according to a predetermined procedure, the operation is not always easy for a person who is unfamiliar with the procedure. In recent years, a structure of a mold has become complicated, and a mold has become expensive. In order to use a mold over a longer period, it is desirable to prevent a mold from being erroneously attached to the mold clamping unit. In the present situation, a solution using a method other than educating an operator of the injection molding machine has not been suggested.

In view of a non-limiting problem described above, the inventors have found a new problem of positively supporting setup of a molding machine, such as an injection molding machine.

A molding machine according to an aspect of the present disclosure includes a control unit. The control unit is configured to determine suitability of a change in mechanical structure or configuration of the molding machine due to an operation performed by a user in a setup step of the molding machine such that the operation is performed as specified, and the control unit is configured to determine the suitability of the change in the molding machine due to the operation based on an output of one or more sensors.

In some embodiments, the molding machine includes a mold clamping unit, and the one or more sensors are included in the mold clamping unit or are attached to the mold clamping unit. In some embodiments, the one or more sensors are a torque sensor that measures torque of an electric motor included in the mold clamping unit or an encoder that measures an amount of rotation of the electric motor. In some embodiments, the one or more sensors include an image sensor. In some embodiments, the molding machine is able to make transition from a guidance mode to a non-guidance mode at any timing according to a user's input. In some embodiments, the plurality of guidances relate to attachment of a mold to the mold clamping unit of the molding machine.

A molding machine according to another aspect of the present disclosure includes a control unit. The control unit is configured to, at the time of a start of a guidance mode, in which a guidance for prompting a user to perform a predetermined operation is presented, detect a state of the molding machine to be obstructive to the operation prompted by the guidance such that an operation to be performed by the user in a setup step of the molding machine is performed as specified.

In some embodiments, the control unit is configured to detect the state of the molding machine to be obstructive to the operation prompted by the guidance using one or more sensors . The molding machine may be an injection molding machine or a die-casting molding machine.

A computer program according to an aspect of the present disclosure causes a computer to execute processing for determining suitability of a change in mechanical structure or configuration of a molding machine due to an operation performed by a user in a setup step of the molding machine and the operation based on an output of one or more sensors such that the operation is performed as specified. A computer program according to another aspect of the present disclosure causes a computer to execute processing for, at the time of a start of a guidance mode, in which a guidance for prompting a user to perform a predetermined operation is presented, detecting a state of the molding machine to be obstructive to the operation prompted by the guidance such that an operation to be performed by the user in a setup step of the molding machine is performed as specified.

According to an aspect of the present disclosure, it is possible to positively support setup of a molding machine.

### BRIEF DESCRIPTION OF THE DRAWINGS

Fig. 1 shows the schematic configuration of an injection molding machine according to an aspect of the present disclosure.
Fig. 2 shows a display screen example of the injection molding machine according to an aspect of the present disclosure.
Fig. 3 shows a schematic operation of the injection molding machine according to an aspect of the present disclosure.
Fig. 4 schematically shows attachment of a mold to a mold clamping unit according to an aspect of the present disclosure.
Fig. 5 schematically shows a state in which the mold is attached in the mold clamping unit according to an aspect of the present disclosure.
Fig. 6 shows a schematic operation of the injection molding machine according to an aspect of the present disclosure.
Fig. 7 shows a schematic operation of the injection molding machine according to an aspect of the present disclosure.
Fig. 8 shows a schematic operation of the injection molding machine according to an aspect of the present disclosure.
Fig. 9 shows a schematic operation of the injection molding machine according to an aspect of the present disclosure.
Fig. 10A shows an example of guidance display that is presented by the injection molding machine according to an aspect of the present disclosure.
Fig. 10B shows an example of alert display that is presented by the injection molding machine according to an aspect of the present disclosure.
Fig. 11A shows an example of guidance display that is presented by the injection molding machine according to an aspect of the present disclosure.
Fig. 11B shows an example of alert display that is presented by the injection molding machine according to an aspect of the present disclosure.
Fig. 12A shows an example of guidance display that is presented by the injection molding machine according to an aspect of the present disclosure.
Fig. 12B shows an example of alert display that is presented by the injection molding machine according to an aspect of the present disclosure.
Fig. 13A shows an example of guidance display that is presented by the injection molding machine according to an aspect of the present disclosure.
Fig. 13B shows an example of alert display that is presented by the injection molding machine according to an aspect of the present disclosure.
Fig. 14A shows an example of guidance display that is presented by the injection molding machine according to an aspect of the present disclosure.
Fig. 14B shows an example of alert display that is presented by the injection molding machine according to an aspect of the present disclosure.
Fig. 15 shows a schematic operation of the injection molding machine according to an aspect of the present disclosure.

### DETAILED DESCRIPTION OF THE INVENTION

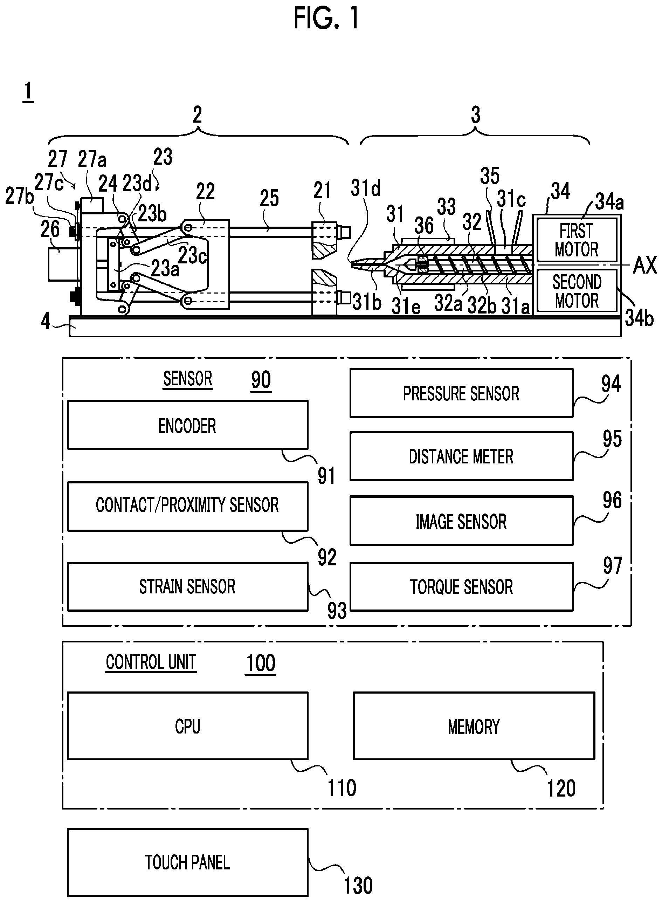

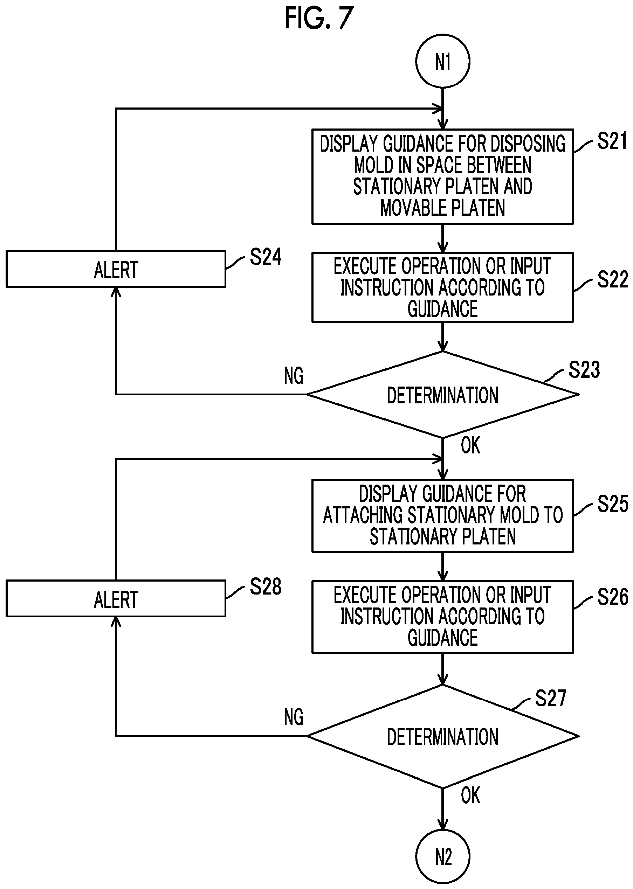

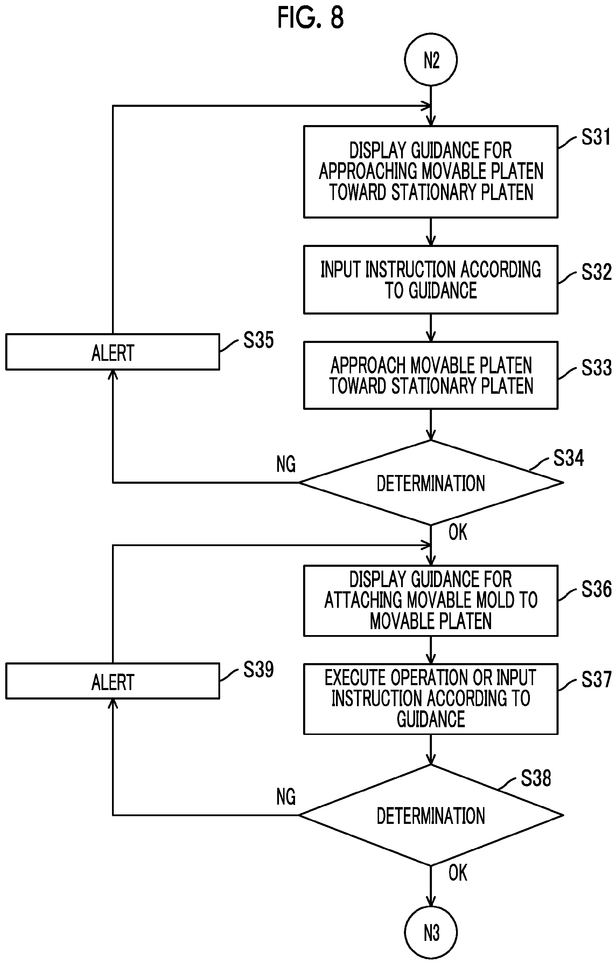

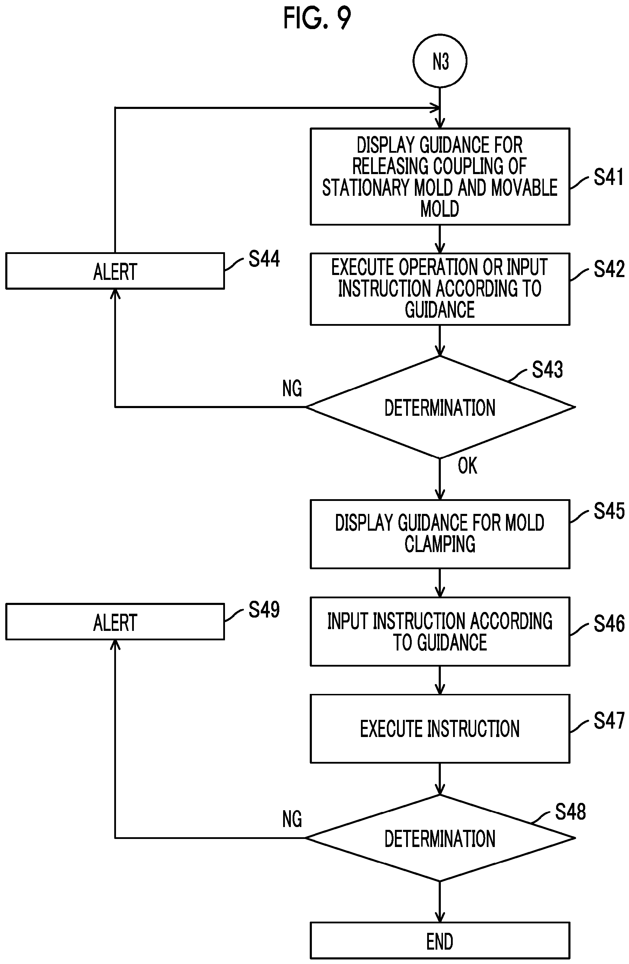

Hereinafter, non-limiting embodiments and features of the invention will be described referring to Figs. 1 to 15. Those skilled in the art would be able to combine respective embodiments and/or respective features without a need of excess descriptions, and would appreciate synergistic effects of such combinations. Overlapping description among the embodiments would be basically omitted. Referenced drawings are prepared for the purpose of illustration of the invention, and may possibly be simplified for the sake of convenience of illustration. Individual features would be understood as a universal feature that is effective not only to an injection molding machine disclosed in the description but also effective to various other injection molding machines not disclosed in the description.

As shown in Fig. 1, an injection molding machine 1 has a mold clamping unit 2 and an injection unit 3 mounted on a common or different frames 4. The injection molding machine 1 performs an injection molding operation (plasticizing process, filling process, and holding pressure process described below) in a state in which a mold unit 5 is attached to the mold clamping unit 2.

A specific configuration of the mold unit 5 is decided by a shape and a size of an injection molding product, and the number of injection molding products. The mold unit 5 may be of a two-plate type or a three-plate type. In some forms, the mold unit 5 has one or more stationary molds 51, one or more movable molds 52, and one or more coupling tools 53. In a case where the stationary mold 51 and the movable mold 52 are matched, a cavity for molding a molding product is defined. A cavity portion of the stationary mold 51 and a cavity portion of the movable mold 52 are combined to form one cavity. In the movable mold 52, a sprue, a runner, and a gate that are provided to supply a molten plastic material to the cavity are formed. In a case where the stationary mold 51 and the movable mold 52 are not matched well, there is a concern that various defects, such as sink and blur, occur. Each of the stationary mold 51 and the movable mold 52 has a temperature control flowpath for temperature control and is temperature-controlled by a temperature control fluid. A guide pin is provided in one mold of the stationary mold 51 and the movable mold 52, and a guide hole is provided on the other mold, such that alignment of both molds is performed. The stationary mold 51 has a stationary mold attachment plate that is provided to attach the stationary mold 51 to the stationary platen 21. Similarly, the movable mold 52 has a movable mold attachment plate that is provided to attach the movable mold 52 to the movable platen 22. The stationary mold 51 has a locating ring that is used for alignment with respect to a hole of the stationary platen 21.

For processing of undercut, the mold unit 5 may be of a slide core type or an inclined slide type. In a case of the slide core type, the stationary mold 51 may include a plurality of elements, such as a slide core, a core return spring, and a core stopping block. The movable mold 52 may include a plurality of elements, such as an angular pin and a locking block. The slide core of the stationary mold 51 is provided with a receiving hole that is provided to receive the angular pin of the movable mold 52. When the movable mold 52 is separated from the stationary mold 51, the slide core is pressed by the angular pin and slidingly moves.

The movable mold 52 can include a spacer block, an ejector plate, an ejector pin, and a return pin. The spacer block is an annular member that is provided between a movable mold body and the movable mold attachment plate. The ejector plate is provided inside the spacer block. The ejector pin and the return pin different in length are coupled to the ejector plate. The ejector pin is a portion that is pressed by the ejector plate, and is used to extrude a molding product. The return pin is pressed by the stationary mold 51 at the time of mold closing, and is used to return the ejector plate to an initial position.

In a rotary injection molding machine, a rotary table may be mounted on a movable platen, and a plurality of movable molds 52 may be attached to the rotary table. That is, a form in which two or more stationary molds 51 are attached to a common stationary platen, and similarly, two or more movable molds 52 are attached to a common movable platen is also assumed.

The coupling tool 53 is any member that is provided to couple the stationary mold 51 and the movable mold 52. As the stationary mold 51 and the movable mold 52 are coupled by the coupling tool 53, the mold unit 5 is easily stored. For example, the coupling tool 53 is configured such that a first protrusion provided in a side surface of the stationary mold 51 is engaged with a second protrusion provided in a side surface of the movable mold 52. A form in which the coupling tool 53 has a lock function is also assumed. As the stationary mold 51 and the movable mold 52 are coupled by the coupling tool 53 and integrated, the mold unit 5 can also be smoothly transported to the mold clamping unit 2. A form in which the coupling tool 53 is pivotably fixed to any one of the stationary mold 51 and the movable mold 52 is also assumed. For example, in a case where the coupling tool 53 is a hook pivotably attached to the side surface of the stationary mold 51, when the hook is hooked on the protrusion in the side surface of the movable mold 52, the stationary mold 51 and the movable mold 52 are fixed. It is also assumed that the coupling tool 53 is magnetically attracted to the stationary mold 51 or the movable mold 52.

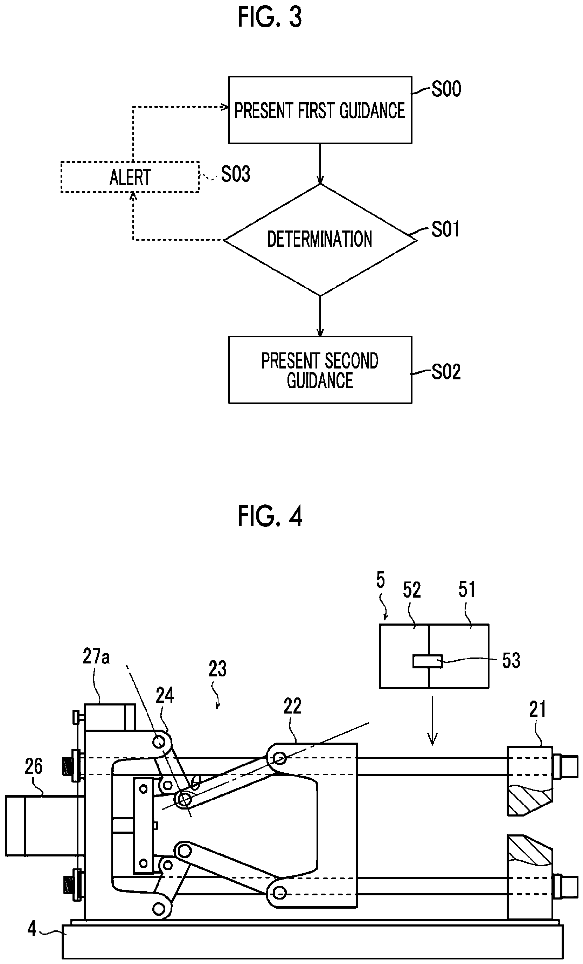

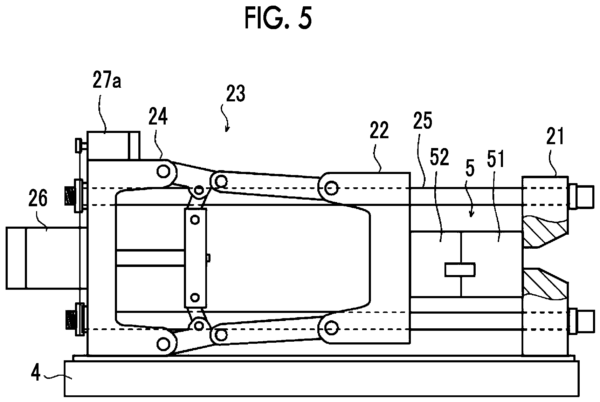

The mold clamping unit 2 has the stationary platen 21, the movable platen 22, a toggle mechanism 23, a toggle support 24, a plurality of tie bars 25, a mold clamping motor 26, and a mold space adjustment mechanism 27. Driving force that is generated by the mold clamping motor 26 is transmitted to the toggle mechanism 23, and the movable platen 22 is moved along the tie bars 25. With this, an interval between a facing surface of the stationary platen 21 and a facing surface of the movable platen 22 is changeable. When the interval the stationary platen 21 and the movable platen 22 is large, the mold unit 5 can be introduced into a space between the stationary platen 21 and the movable platen 22 (see Fig. 4). In a state in which the mold unit 5 is introduced into the space between the stationary platen 21 and the movable platen 22, the stationary mold 51 is attached to the stationary platen 21, and the movable mold 52 can be attached to the movable platen 22 (see Fig. 5) . After the stationary mold 51 (that is, the stationary mold attachment plate) is attached to the stationary platen 21, the movable mold 52 (that is, the movable mold attachment plate) may be attached to the movable platen 22. On the contrary, after the movable mold 52 is attached to the movable platen 22, the stationary mold 51 may be attached to the stationary platen 21.

In a state in which the mold unit 5 is attached to the mold clamping unit 2, the movable platen 22 is moved as described above, and with this, moldclosing, mold clamping, andmoldopening of the mold unit 5 are performed. Mold closing refers to a state in which the facing surface of the stationary mold 51 and the facing surface of the movable mold 52 are brought into contact with each other and a part of the cavity of the stationary mold 51 and a part of the cavity of the movable mold 52 spatially communicate with each other. Mold clamping refers to a state in which the movable mold 52 is strongly pressed by the stationary mold 51 in order to withstand injection pressure of the material from the injection unit 3. Mold opening refers to a state in which the facing surface of the stationary mold 51 and the facing surface of the movable mold 52 are not in contact with each other, and an interval is provided between both facing surfaces. As will be apparent to those skilled in the art, the mold clamping unit 2 is configured to repeat a loop of mold closing, mold clamping, and mold opening.

The mold clamping unit 2 can include an ejector unit that is provided to eject a molding product from the mold unit 5. The ejector unit is attached, for example, at the back of the movable platen 22. The ejector unit includes an ejector rod, and a drive source that operates the ejector rod. In a case where the ejector rod is moved forward, the ejector plate of the mold unit 5 is pressed by the ejector rod. The molding product of the stationary mold 51 is pressed by the ejector pin and is ejected from the mold unit 5. The injection molding machine 1 operates the ejector unit in synchronization with mold opening.

The toggle mechanism 23 has a crosshead 23a that receives the driving force from the mold clamping motor 26, first and second links 23b and 23c that are coupled to be rotatable between the toggle support 24 and the movable platen 22, and third links 23d that couple the crosshead 23a and the first links 23b. Rotation force that is generated by the mold clamping motor 26 is converted to linear force by a conversion unit, such as a ball screw, and is applied to the crosshead 23a. For example, the crosshead 23a moves straight toward the stationary platen 21 with forward rotation of the mold clamping motor 26, an angle θ (see Fig. 4) between the first link 23b and the second link 23c increases, and the movable platen 22 moves straight toward the stationary platen 21. In a case where the movable mold 52 is attached to the movable platen 22, the movable mold 52 also moves straight. The crosshead 23a is moved in a direction to be separated from the stationary platen 21 with reverse rotation of the mold clamping motor 26, the angle θ between the first link 23b and the second link 23c decreases, and the movable platen 22 moves straight in a direction to be separated from the stationary platen 21. In a case where the movable mold 52 is attached to the movable platen 22, the movable mold 52 also moves straight in the same direction. A direction in which the movable platen 22 in the mold clamping unit 2 and the movable mold 52 attached to the movable platen 22 move toward the stationary platen 21 and the stationary mold 51 attached to the stationary platen 21 can also be defined as a forward direction, and an opposite direction can also be defined as a rearward direction.

The toggle mechanism 23 amplifies the driving force of the mold clamping motor 26 and transmits the driving force to the movable platen 22. An amplification factor is also referred to as a toggle magnification. The toggle magnification changes depending on the angle θ between the first link 23b and the second link 23c. The angle θ and a position of the crosshead 23a are correlated. Accordingly, the angle θ can be obtained from the position of the crosshead 23a. When the angle θ is 180°, the toggle magnification becomes maximum. A form in which the toggle mechanism 23 is not employed and a hydraulic cylinder is employed to move the movable platen 22 is also assumed.

The mold space adjustment mechanism 27 is configured to adjust a position of the toggle support 24 with respect to the stationary platen 21 (a front-rear interval of the stationary platen 21 and the toggle support 24, in other words, a mold space) . The mold space adjustment mechanism 27 includes a mold space adjustment motor 27a. Rotation force of the mold space adjustment motor 27a is transmitted to a nut 27c screwed to a screw shaft 27b at a rear end portion of the tie bar 25, a position of the toggle support 24 beside the tie bar 25 is changed, and the position of the toggle support 24 with respect to the stationary platen 21 (that is, the interval between the stationary platen 21 and the toggle support 24) is changed. The rotation force of the mold space adjustment motor 27a is transmitted to the nut 27c through transmission elements, such as a belt and a gear, or directly.

The injection unit 3 supplies the molten plastic material to the mold unit 5 attached to the mold clamping unit 2. The injection unit 3 is movable on the same frame 4 as or the frame 4 different from the mold clamping unit 2, and the mold clamping unit 2 is moved, for example, to approach or to be separated from the stationary platen 21. For example, the injection unit 3 can be placed on rails, and the injection unit 3 can be made to approach and to be separated from the stationary platen 21 based on expansion and contraction of the hydraulic cylinder. Various other additional or alternative configurations for relatively moving the injection unit 3 with respect to the stationary platen 21 can be employed.

The injection unit may be of an in-line screw type or a preplasticasting type. In the description, although the injection unit is of an in-line screw type, the invention is not limited thereto. The injection unit 3 has a cylinder 31, a screw 32, a heater 33, and a drive unit 34. The cylinder 31 is a metallic cylindrical member that accommodates the screw 32, and has a cylinder barrel portion 31a and a nozzle portion 31b. The cylinder barrel portion 31a accommodates the screw 32. The nozzle portion 31b has a linear flow path having a flow path diameter smaller than a flow path diameter of the cylinder barrel portion 31a, and has a discharge port 31d that discharges the molten plastic material supplied from the cylinder barrel portion 31a. The cylinder barrel portion 31a has a material feed port 31c that receives the plastic material, for example, a pellet supplied from a hopper 35. The pellet is molten with heat transmitted from the heater 33 through the cylinder barrel portion 31a, and is transported to a front side, that is, toward the discharge port 31d of the nozzle portion 31b with rotation of the screw 32. As will be understood from the following description, a movement direction of the screw 32 at the time of filling is a front side, and a movement direction of the screw 32 at the time of plasticizing is a rear side.

The screw 32 has a shaft portion 32a and a slide 32b provided on an outer periphery of the shaft portion 32a in a helical shape, and can transport the plastic material in a solid state and a molten state to the front side of the cylinder 31 with the rotation thereof . The screw 32 can rotate with reception of rotation force from a first motor 34a included in the drive unit 34. The screw 32 can move to the front side (a side approaching the nozzle portion 31b) and the rear side (a side being separated from the nozzle portion 31b) in the cylinder 31 in a stationary state with reception of driving force from a second motor 34b in the drive unit 34. The backflow prevention ring 36 is attached to a tip end (front end) of the screw 32. When the screw 32 is moved to the nozzle portion 31b side in the cylinder 31 in a stationary state, the backflow prevent ion ring 36 prevents the molten plastic material stored in the storage space 31e from flowing to the rear side.

The heater 33 is attached to an outer periphery of the cylinder 31, and generates heat, for example, with feedback-controlled energization. The heater 33 is attached to an outer periphery of at least one of the cylinder barrel portion 31a or the nozzle portion 31b in any aspect.

The rotation force that is generated by the first motor 34a of the drive unit 34 is supplied to the screw 32 directly or is supplied to the screw 32 through a relay unit, such as a reduction gear. A form in which the first motor 34a is embedded with a reduction gear is also assumed. The rotation force that is generated by the second motor 34b of the drive unit 34 is converted to linear force by a conversion unit, such as a ball screw, and is transmitted to the screw 32. While there are various mechanical configurations of the drive unit 34, for example, the screw 32 and the first motor 34a are connected coaxially, and a connection unit is fixed to a nut of the ball screw. A cylinder, for example, a hydraulic cylinder can also be used instead of the second motor 34b.

An outline of the operation of the injection unit 3 will be described. Heat is applied from the heater 33 to the cylinder 31, and the pellet supplied into the cylinder barrel portion 31a through the hopper 35 is molten. The screw 32 rotates within the cylinder barrel portion 31a with the rotation force from the first motor 34a, the plastic material is sent to the front side along a helical groove of the screw 32, and the plastic material is gradually molten in this process. The screw 32 is moved rearward with supply of the molten plastic material to the front side of the screw 32, and the molten plastic material is stored in the storage space 31e (referred to as a "plasticizing process") . A rotating speed of the screw 32 is detected using an encoder of the first motor 34a. In the plasticizing process, the second motor 34b may be driven to apply set backpressure to the screw 32 in order to restrict a rapid rearward movement of the screw 32. The backpressure to the screw 32 is detected, for example, using a pressure detector. The screw 32 is moved rearward to a plasticizing completion position, a predetermined amount of molten plastic material is stored in the storage space 31e ahead the screw 32, and the plasticizing process is completed.

Subsequently to the plasticizing process, the screw 32 is moved toward the nozzle portion 31b from a filling start position to a filling completion position according to the driving force from the second motor 34b, and the molten plastic material stored in the storage space 31e is supplied into the mold unit 5 through the discharge port 31d of the nozzle portion 31b (referred to as a "filling process") . A position or a speed of the screw 32 is detected, for example, using an encoder of the second motor 34b. In a case where the position of the screw 32 reaches a set position, switching (so-called V/P switching) from the filling process to a holding pressure process is performed. A position where the V/P switching is performed is referred to as a V/P switching position. A set speed of the screw 32 may be changed according to the position of the screw 32, a time, or the like.

When the position of the screw 32 reaches the set position in the filling process, the screw 32 may be temporarily stopped at the set position, and thereafter, the V/P switching may be performed. Immediately before the V/P switching, slow-speed forward movement or slow-speed rearward movement of the screw 32 may be performed, instead of stopping the screw 32. A screw position detector that detects the position of the screw 32 and a screw speed detector that detects the speed of the screw 32 are not limited to the encoder of the second motor 34b, and other kinds of detectors can be used.

Subsequently to the filling process, holding pressure of the plastic material ahead of the screw 32 is maintained at set pressure according to the front-side movement of the screw 32, and the remaining plastic material is extruded to the mold unit 5 (referred to as a "holding pressure process"). An insufficient plastic material due to cooling contraction in the mold unit 5 can be supplemented. The holding pressured is detected, for example, using a pressure detector. A set value of the holding pressure may be changed according to an elapsed time from the start of the holding pressure process. In the holding pressure process, the plastic material of the cavity in the mold unit 5 is gradually cooled, and an inlet of the cavity is closed with the solidified plastic material at the time of the completion of the holding pressure process. This state is referred to as gate seal, and a backflow of the plastic material from the cavity is prevented. After the holding pressure process, a cooling process is started. In the cooling process, solidification of the plastic material of the cavity is performed. In order to reduce a molding cycle time, the plasticizing process may be performed during the cooling process.

Subsequently to the holding pressure process, the above-described plasticizing process is performed.

The injection molding machine 1 continuously manufactures molding products based on a cooperative operation of the mold clamping unit 2 and the injection unit 3. The injection molding machine 1 has a control unit 100 that is provided to control the mold clamping unit 2 and the injection unit 3. The control unit 100 performs, for example, sequence control of the mold clamping motor 26, the mold space adjustment motor 27a, the first motor 34a, and the second motor 34b. The control unit 100 performs mold closing, mold clamping, and mold opening based on the control of the mold clamping motor 26. The control unit 100 performs plasticizing, filling, and holding pressure based on the control of the first and second motors 34a and 34b. The control unit 100 can also control heat generation of the heater 33, cooling of the mold unit 5, operation of the ejector unit, and a position of the injection unit 3 with respect to the mold clamping unit 2, in addition to the above-described control. For example, the control unit 100 continuously performs plasticizing, filling, and holding pressure during mold clamping of the mold unit 5. Subsequently, the control unit 100 operates a cooling unit in order to cool the mold unit 5. Subsequently, the control unit 100 separates the movable mold 52 from the stationary mold 51 based on the control of the mold clamping motor 26 and operates the ejector unit.

The injection molding machine 1 includes a plurality of sensors 90. The sensors 90 are, for example, one or more selected from an encoder 91, a contact/proximity sensor 92, a strain sensor 93, a pressure sensor 94, a distance meter 95, an image sensor 96, and a torque sensor 97. An example of the encoder 91 is a rotary encoder or a linear encoder. Either of an increment type or an absolute type or both types may be employed. Typically, the encoder 91 detects an amount of rotation of an electric motor, such as the mold clamping motor 26, the mold space adjustment motor 27a, the first motor 34a, and the second motor 34b. An output signal of the encoder that measures the amount of rotation of the mold clamping motor 26 is transmitted to the control unit 100, a position of the movable mold 52 is controlled with high accuracy, and state change of mold closing, mold clamping, and mold opening is achieved. An output signal of the encoder that measures the amount of rotation of the mold space adjustment motor 27a is transmitted to the control unit 100, and the position of the toggle support 24 with respect to the stationary platen 21 (that is, the interval between the stationary platen 21 and the toggle support 24) is adjusted. An output signal of the encoder that measures the amount of rotation of the first motor 34a is transmitted to the control unit 100, and an amount of rotation of the screw 32 is controlled with high accuracy (that is, the plasticizing process is controlled with high accuracy) . An output signal of the encoder that measures the amount of rotation of the second motor 34b is transmitted to the control unit 100, and the position of the screw 32 within the cylinder 31 is controlled with high accuracy (that is, the filling process and the holding pressure process are controlled with high accuracy) .

The sensors 90 may include a plurality of kinds of sensors, such as the contact/proximity sensor 92, the strain sensor 93, the pressure sensor 94, the distance meter 95, the image sensor 96, and the torque sensor 97 and other kinds of sensors. The contact/proximity sensor 92 can be used to determine whether or not a component of the injection molding machine 1, for example, the mold unit 5 or the cylinder 31 is in a target position or posture. As the contact sensor, a button type switch or a strain gauge is exemplified. The proximity sensor is, for example, a sensor that detects an induced current according to electromagnetic induction induced by approach of a displacement, but is not limited to a kind of the principle. The strain sensor 93 can be used to detect strain of a component of the injection molding machine 1, for example, the tie bar 25 and determines an attachment state of the mold unit 5. The distance meter 95 can be used to determine whether or not a component of the injection molding machine 1, for example, the mold unit 5 or the cylinder 31 is in a target position or posture, in addition to or instead of the contact/proximity sensor 92. The distance meter 95 is, for example, of an optical type and optically measures a distance to a target based on a time of flight (TOF), but is not limited to this principle. The image sensor 96 can be used to acquire an image for state determination of the injection molding machine 1. The image sensor 96 is a CCD, a CMOS, or other kinds of image acquisition units. The image sensor 96 can include an image processing circuit. The torque sensor 97 measures torque of an electric motor, such as the mold clamping motor 26 or the mold space adjustment motor 27a described below. The torque sensor 97 is provided, for example, between an output shaft of the mold clamping motor 26 and a screw shaft of the ball screw.

It is also assumed that the same kind of sensor is used for a different purpose. For example, a strain gauge can also be used for measurement of an amount of strain, in addition to the presence or absence of strain. Accordingly, the strain gauge can also be used as a contact sensor and can also be used as a strain sensor. Similarly, the distance meter 95 is not limited to the measurement of the distance, and can also detect the presence or absence of a target. Similarly, the image sensor 96 can be used for various purposes. For example, the control unit 100 can determine whether or not a current state of the injection molding machine 1 is an intended state based on comparison of a master image with an acquired image. Various image processing techniques, such as binarization processing, edge extraction processing, and feature point extraction processing on an acquired image, can be utilized.

The control unit 100 is constituted of one or more computers . The control unit 100 does not need to be disposed close to the mold clamping unit 2 and the injection unit 3. The control unit 100 may be disposed remotely from the mold clamping unit 2 and the injection unit 3 as long as communication with the sensors 90 incorporated in or attached to the mold clamping unit 2 and the injection unit 3 can be performed. The control unit 100 is a so-called computer, and includes one or more central processing units (CPUs) 110 and one or more memories 120. One or more touch panels 130 as an example of an input/output unit and a display unit are connected to the control unit 100 in a wired or wireless manner. A form in which a touch panel of a remote computer (for example, a smartphone) from the computer of the control unit 100 is used as the touch panel 130 is also assumed.

The CPU 110 executes a program stored in the memory 120 and implements desired control on the injection molding machine 1. The memory 120 is an information storage unit, such as a hard disk drive (HDD), a solid state drive (SSD), or a semiconductor memory (DRAM, SRAM). The memory 120 may include a memory area embedded in the CPU 110. The touch panel 130 includes a display panel, such as a liquid crystal panel or an organic EL panel, and a touch sensor group incorporated in the display panel. A touch position of a finger on the display panel is detected by the touch sensors.

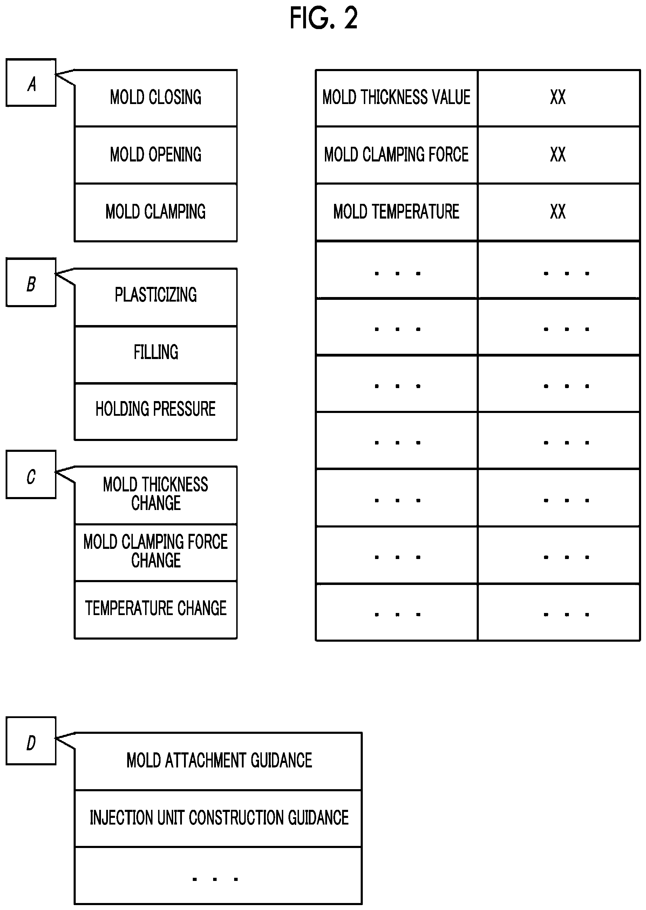

The user can touch and select an icon of the touch panel 130 to control the injection molding machine 1. For example, in a case where a "mold closing" icon as one option developed from an icon A on the touch panel 130 shown in Fig. 2 is touched, the CPU 110 performs control such that the mold clamping motor 26 executes mold closing. Measured values of the sensors incorporated in or attached to the injection molding machine 1, and the like are also displayed on the touch panel 130. The "mold closing" icon, a "mold opening" icon, and a "mold clamping" icon may be displayed on an initial screen. The same applies to a "plasticizing" icon, a "filling" icon, a "holding pressure" icon, a "mold space change" icon, a "mold clamping force change" icon, and a "temperature change" icon.

In the embodiment, the control unit 100 is configured to present a plurality of guidances, each of which prompts a user to perform a predetermined operation, in a predetermined order such that a plurality of operations to be performed by the user in a setup step of the injection molding machine 1 are performed in a predetermined order. As shown in Fig. 2, a "mold attachment guidance" icon and an "injection unit construction guidance" icon are displayed on the touch panel 130. As the user touches and selects the icon of any one of "mold attachment guidance" and the "injection unit construction guidance", the injection molding machine 1 is changed from a normal mode (non-guidance mode) to any guidance mode. With this, suppression of a construction mistake of the injection molding machine 1 is promoted, and reduction of a construction time for a user who is unfamiliar with the construction of the injection molding machine 1 is promoted.

The presentation of a guidance of the injection molding machine 1 can be achieved by various mediums, for example, sound, light, vibration, an image, and video. Typically, the control unit 100 makes the touch panel 130 display an image guidance; however, the control unit 100 may make a sound output unit, such as a speaker, output a voice guidance or may execute both of an image guidance and a voice guidance. A video guidance can also be used in addition to or instead of an image guidance. A guidance may be a combination of two or more selected from an image guidance, a video guidance, and a voice guidance.

In the embodiment, the control unit 100 is configured to determine suitability of a change in the injection molding machine 1 due to an operation to be performed by the user in the setup step of the injection molding machine 1 such that the operation is performed as specified. The control unit 100 is configured to determine the suitability of the change in the injection molding machine 1 due to the operation based on an output of one or more sensors. The injection molding machine 1 performs determination between presentation of continuous guidances, that is, between presentation of a first guidance and presentation of a second guidance shown in Fig. 3, but is not necessarily limited thereto.

As shown in Fig. 3, the injection molding machine 1 presents a first guidance for prompting a first operation to the user (S00), determines whether or not a first change occurs in the injection molding machine due to the first operation based on an output of one or more sensors (S01), and presents a second guidance for prompting the user to perform a second operation to be performed next to the first operation to the user according to a determination result indicating that the first change occurs (S02) . With this, it is possible to confirm whether or not the first operation is actually operated or whether or not an appropriate change in mechanical structure or configuration occurs in the injection molding machine due to the first operation. A burden of cause investigation that may occur in a case where the determination is not performed can be reduced. That is, it is not easy to specify an operation for which a mistake occurs in a case where the determination is not performed. For example, after the mold unit 5 is attached to the mold clamping unit 2 of the injection molding machine 1, in a case where desired mold clamping force is not obtained, one or more kinds of determination is performed during a step of attaching the mold unit 5 to the mold clamping unit 2, whereby it becomes easy to specify an operation as a cause for which the desired mold clamping force is not obtained.

The user can transmit a fact that the first operation prompted by the first guidance is completed to the control unit 100 of the injection molding machine 1 using a method of touching and selecting an "operation completion" icon of the touch panel 130. The control unit 100 performs determination according to an input (S01). Alternatively, the control unit 100 automatically performs determination when a predetermined time has elapsed from the presentation of the first guidance (S00). It is also assumed that the control unit 100 repeats determination at predetermined time intervals.

As an option, the injection molding machine 1 presents an alert to the user according to a determination result indicating that the first change does not occur (S03) . For example, an alert to be effect that the stationary mold 51 is not attached to the stationary platen 21 in an appropriate position or alignment is presented. Similarly to the presentation of the "guidance", the presentation of the "alert" can be achieved by various mediums, for example, sound, light, vibration, an image, and video. Typically, the control unit 100 makes the touch panel 130 display an image alert; however, the control unit 100 may make a sound output unit, such as a speaker, output a voice alert or may execute both of an image alert and a voice alert. A video alert can also be used in addition to or instead of an image alert. A guidance may be a combination of two or more selected from an image alert, a video alert, and a voice alert.

As an option, the control unit 100 is configured to invalidate an input of a command to the injection molding machine 1 relating to an operation to be prompted by a guidance presented after the first guidance when the user is prompted to perform the first operation by the first guidance. The invalidation includes prohibition of the input of the command and disregard of the input command. For example, when a guidance for prompting mold closing is presented, even though the mold clamping icon is touched and selected, the control unit 100 disregards the input and presents the user that an erroneous input is made through an alert.

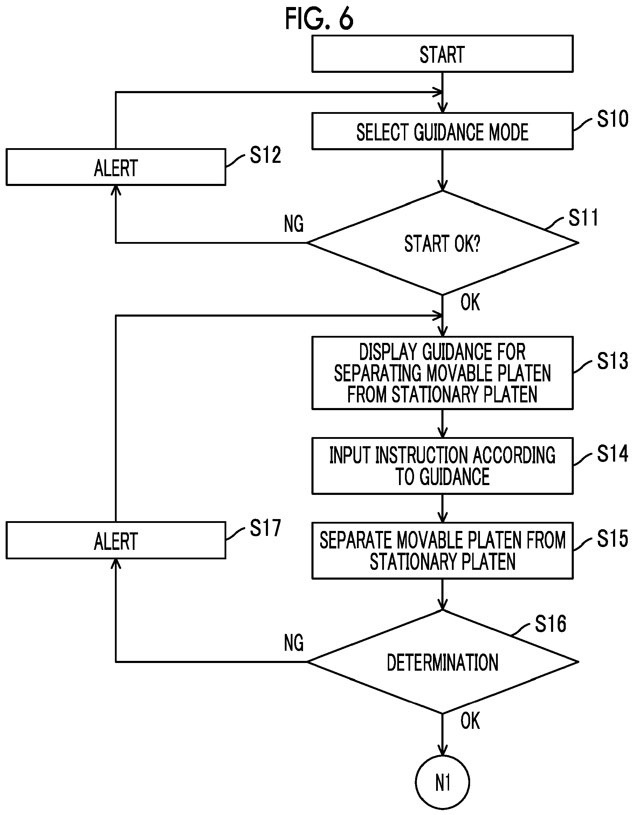

Anon-limiting example of the guidance mode of the injection molding machine 1 will be further described referring to Figs. 4 to 14. It is not essential to perform all of many kinds of determination shown in Figs. 6 to 9. As any kind of determination is performed, suppression of a construction mistake of the injection molding machine 1 is promoted, and reduction of a construction time for a user who is unfamiliar with the construction of the injection molding machine 1 is promoted. Figs. 4 and 5 schematically show attachment of the mold unit 5 to the mold clamping unit 2 for the construction of the injection molding machine 1. As shown in Fig. 6, first, the user selects the guidance mode (S10) . The selection of the guidance mode is not limited to touching and selecting an icon on the touch panel 130, and can also be made by a voice message of the user, such as "Start the guidance mode" . The same applies to a user's input of various other commands on the control unit 100. In some forms, it is possible to make transition from the guidance mode to the non-guidance mode according to selection of a "guidance mode stop" icon or a user's input, such as voice "guidance mode stop" .

Next, the control unit 100 of the injection molding machine 1 determines whether or not to start the guidance mode (S11). A specific condition that the guidance mode should be started can be described in the program. The control unit 100 can also determine appropriateness of the start of the guidance mode according to an output from one or more sensors 90. In a case where NG determination is made in S11, the control unit 100 presents an alert to the user (S12) . The alert may show the user a reason for which the guidance mode cannot be started and may present a measure needed for starting the guidance mode to the user, but is not limited thereto.

For example, the injection molding machine 1 detects a state of a clamping mechanism that clamps the stationary mold 51 to the stationary platen 21 (S11) . When detection is made that the clamping mechanism is in a clamping posture or position, the injection molding machine 1 presents an alert to the user in order to change the clamping mechanism to a non-clamping posture or position (S12). Additionally or alternatively, when the clamping mechanism is in the clamping posture or position, the injection molding machine 1 generates a command for changing the clamping mechanism to the non-clamping posture or position, and the clamping mechanism is changed from the clamping posture or position to the non-clamping posture or position according to the command.

In this way, the injection molding machine 1 detects a state of the injection molding machine to be obstructive to an operation to be prompted by a guidance at the time of the start of the guidance mode. The injection molding machine 1 presents an alert to the user or changes the state of the injection molding machine 1 so as to be not obstructive to the operation with the detection. With this, a plurality of operations are promoted to be performed by the user as specified. The injection molding machine 1 may detect the state of the injection molding machine to be obstructive to the operation prompted by the guidance using one or more sensors . The injection molding machine 1 can detect whether the clamping mechanism is in the clamping posture or in the non-clamping posture based on an output of the clamping mechanism, for example, an output value of an encoder of a drive motor embedded in the clamping mechanism. Of course, the injection molding machine 1 may also detect the state of the clamping mechanism based on an output of a sensor provided outside the clamping mechanism. A start condition of the guidance mode can be significantly different depending on the kind of guidance. It is understood that the state confirmation of the clamping mechanism is a simple example.

In a case where OK determination is made in S11, the injection molding machine 1 presents a guidance for separating the movable platen 22 to the stationary platen 21 to the user. The user touches and selects the "mold opening" icon of the touch panel 130 according to the guidance (S14) . The injection molding machine 1 operates the mold clamping motor 26 in order to separate the movable platen 22 from the stationary platen 21 according to the input (S15). Next, the injection molding machine 1 determines whether or not the movable platen 22 is separated from the stationary platen 21 to an appropriate position (S16). For the determination, a sensor that measures the position of the movable platen 22 beside the tie bar 25, for example, the distance meter 95 can be used. The control unit 100 makes OK determination when the measured distance falls within a range of a target distance, and makes NG determination otherwise. Alternatively, the contact/proximity sensor 92 can be provided at an appropriate position, and determination can be made whether or not the movable platen 22 is moved to a target position.

In a case where NG determination is made in S16, the injection molding machine 1 can present an alert (S17). In a case where the movable platen 22 is not sufficiently separated from the stationary platen 21, there is a risk that the mold unit 5 is brought into contact with any one of the stationary platen 21 and the movable platen 22. There is a case where the mold unit 5 is more expensive than the injection molding machine 1, and the safety of the mold unit 5 can be increased.

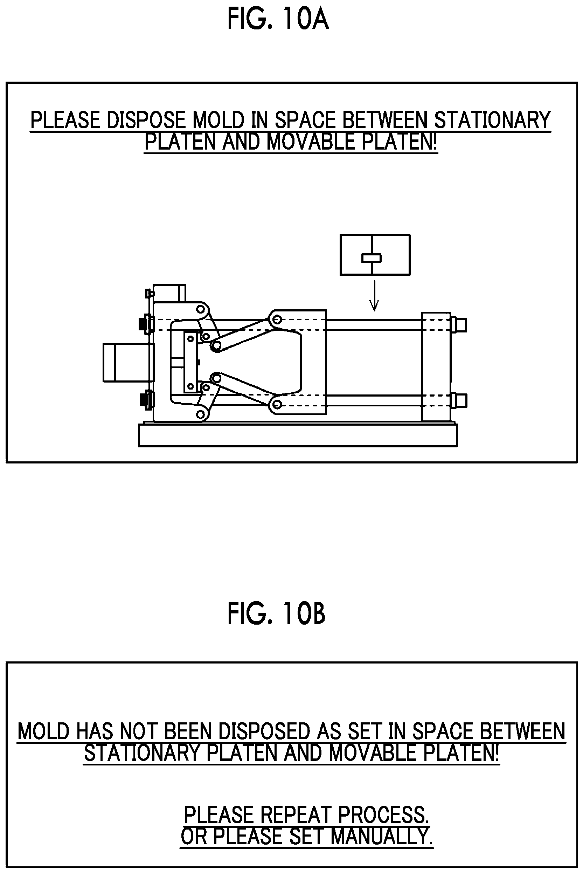

In a case where OK determination is made in S16, the injection molding machine 1 presents a guidance for disposing the mold unit 5 in the space between the stationary platen 21 and the movable platen 22 (S21) . As shown in Fig. 10A, an image guidance can represent an operation to be performed by the image guidance using an image. The user moves the mold unit 5 from a certain place, for example, a mold place to the space between the stationary platen 21 and the movable platen 22 according to the guidance using any method, for example, a crane (not shown) (S22). A form in which the mold unit 5 is transported to the space between the stationary platen 21 and the movable platen 22 using a conveyor, such as a roller conveyor or a belt conveyor, is also assumed. A form in which an automated transport device that automatically transports the mold unit 5 to the space between the stationary platen 21 and the movable platen 22 is used is also assumed. In this form, the user instructs the automated transport device to transport the mold unit 5.

Next, the injection molding machine 1 determines whether or not the mold unit 5 is appropriately disposed in the space between the stationary platen 21 and the movable platen 22 (S23) . For the determination, a sensor that can detect the presence or absence of the mold unit 5 between the movable platen 22 and the stationary platen 21, for example, the distance meter 95 can be used. When the mold unit 5 is disposed between the stationary platen 21 and the movable platen 22, a measured value of the distance meter 95 becomes small. Accordingly, the control unit 100 can determine the presence or absence of the mold unit 5 between the stationary platen 21 and the movable platen 22 based on comparison of the measured value with a threshold value. A place where the distance meter is fixed is not limited to the stationary platen 21 or the movable platen 22, and may be the frame 4. The proximity sensor can also be used in addition to or instead of the distance meter. In a case where NG determination is made in S23, the injection molding machine 1 can present an alert (S24) . As shown in Fig. 10B, an image alert can represent a content to be warned by the image alert using characters.

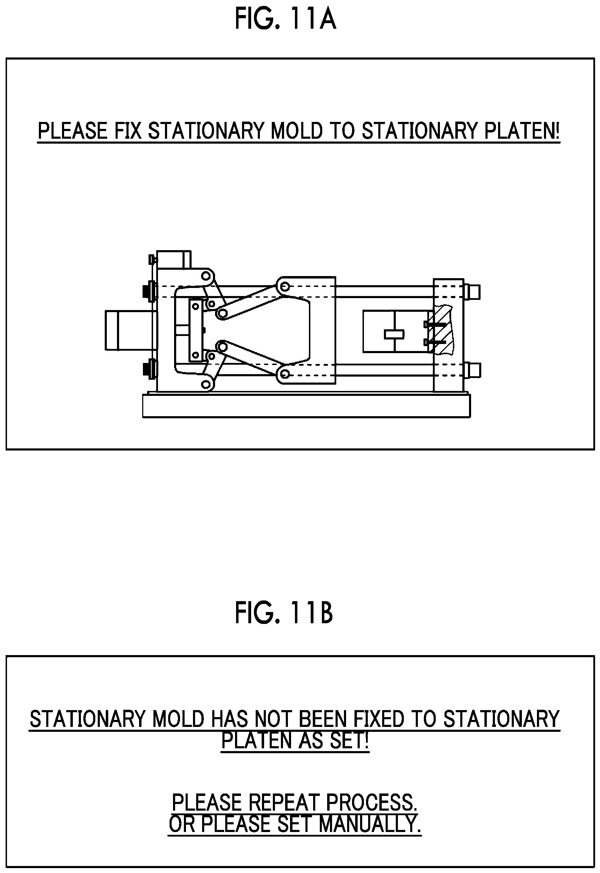

In a case where OK determination is made in S23, the injection moldingmachine 1 presents a guidance for attaching the stationary mold 51 to the stationary platen 21 to the user (S25) . As shown in Fig. 11A, an image guidance can represent an operation to be prompted by the image guidance using an image. The user attaches the stationary mold 51 to the stationary platen 21 according to the guidance using any method, for example, a fastener, such as a bolt (S26) . In the injection molding machine 1 in which replacement of the mold unit 5 is predicted to be frequently performed, a clamping mechanism that fixes the stationary mold 51 to the stationary platen 21 is mounted in the mold clamping unit 2. In this form, the user inputs a command to the touch panel 130 to operate the clamping mechanism according to the guidance (S26).

Next, the injection molding machine 1 determines whether or not the stationary mold 51 is appropriately attached to the stationary platen 21 (S27) . For the determination, the distance meter 95 that measures the position of the stationary mold 51 on the stationary platen 21 can be used. Additionally or alternatively, one or more contact/proximity sensors 92 can be provided in the stationary platen 21. When the stationary mold 51 has a rectangular outer peripheral shape, an attachment state of the stationary mold 51 to the stationary platen 21 is different according to whether the stationary mold 51 is attached to the stationary platen 21 such that a long side of the outer periphery is arranged on an upper side in a vertical direction or a short side of the outer periphery is disposed on the upper side in the vertical direction. With the above-described determination (S27), it is possible to avoid or suppress erroneous attachment of the stationary mold 51 to the stationary platen 21. In a case where NG determination is made in S27, the injection molding machine 1 can present an alert (S28) . As shown in Fig. 11B, an image alert can represent a content to be warned by the image alert using characters.

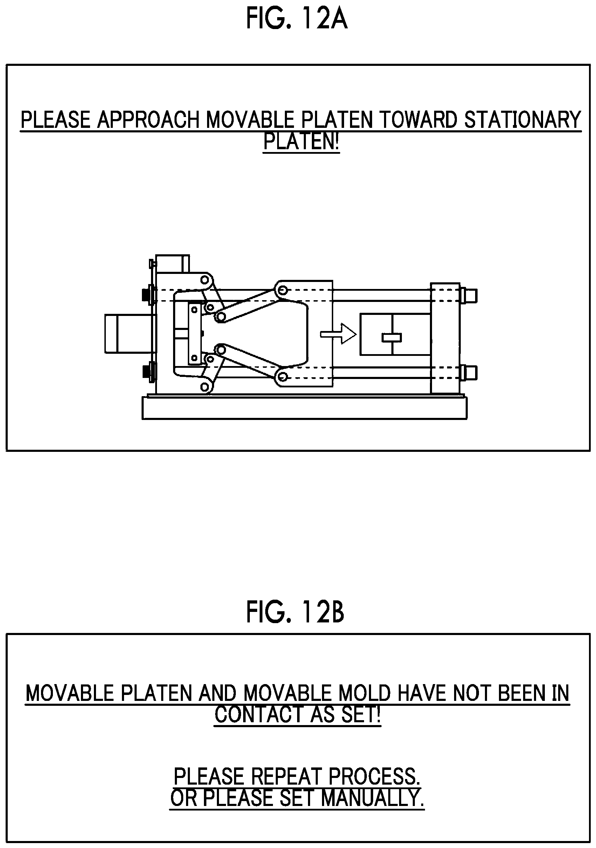

In a case where OK determination is made in S27, the injection molding machine 1 presents a guidance for making the movable platen 22 approach the stationary platen 21 to the user (S31) . As shown in Fig. 12A, an image guidance can represent an operation to be performed by the image guidance using an image. The user touches and selects the "mold closing" icon of the touch panel 130 according to the guidance (S32). The injection molding machine 1 operates the mold clamping motor 26 in order to make the movable platen 22 approach the stationary platen 21 according to the input (S33). Next, the injection molding machine 1 determines whether or not the movable platen 22 is brought into contact with the movable mold 52 (S34). For this purpose, various sensors, such as the contact/proximity sensor 92, the distance meter 95, the encoder 91, and the torque sensor 97, can be used. For example, a contact sensor can be disposed in a recessed portion of the movable platen 22 to detect surface contact of the movable platen 22 and the movable mold 52. The control unit 100 may determine whether or not the movable platen 22 is moved to the target position where a target mold space is obtained with reference to the measured value of the distance meter 95. The control unit 100 may determine whether or not the movable platen 22 is moved to the target position with reference to an output of the encoder 91 that measures the amount of rotation of the mold clamping motor 26. The control unit 100 may detect a timing, at which the movable mold 52 is brought into contact with the stationary mold 51, to stop the rotation of the mold clamping motor 26 with reference to an output of the torque sensor 97 that detects torque of the mold clamping motor 26. In a case where NG determination is made in S34, the injection molding machine 1 can present an alert (S35) . As shown in Fig. 12B, an image alert can represent a content to be warned by the image alert using characters.

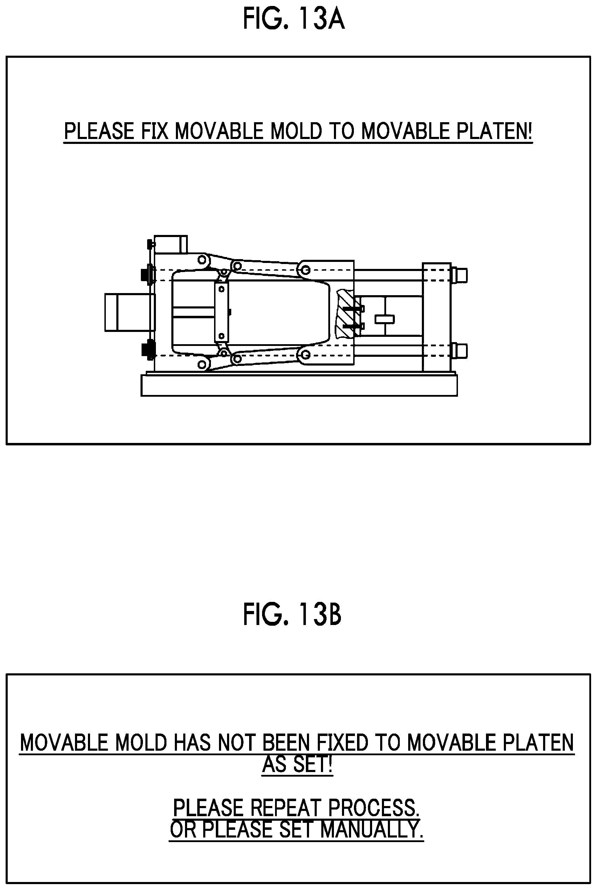

In a case where OK determination is made in S34, the injection molding machine 1 presents a guidance for attaching the movable mold 52 to the movable platen 22 to the user (S36). As shown in Fig. 13A, an image guidance can represent an operation to be performed by the image guidance using an image. The user attaches the movable mold 52 to the movable platen 22 according to the guidance using any method, for example, a fastener, such as a bolt (S37). In a form in which the clamping mechanism is mounted in the mold clamping unit 2, the user inputs a command to the touch panel 130 to operate the clamping mechanism according to the guidance (S37).

Next, the injection molding machine 1 determines whether or not the movable mold 52 is appropriately attached to the movable platen 22 (S38). For the determination, the distance meter 95 that measures the position of the movable mold 52 on the movable platen 22 can be used. Additionally or alternatively, one or more contact/proximity sensors 92 can be provided in the movable platen 22. In a case where NG determination is made in S38, the injection molding machine 1 can present an alert (S39) . As shown in Fig. 13B, an image alert can represent a content to be warned by the image alert using characters.

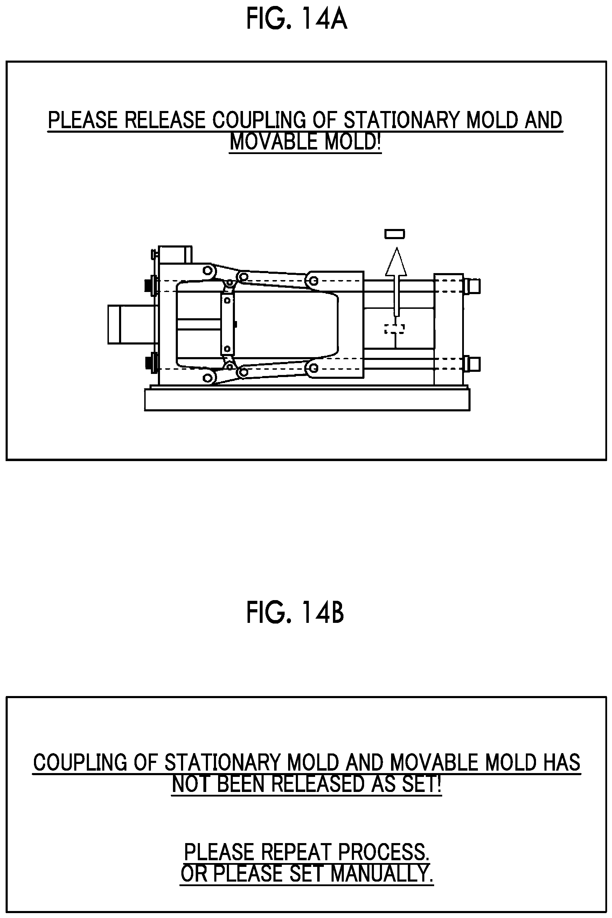

In a case where OK determination is made in S38, the injection molding machine 1 presents a guidance for decoupling the stationary mold 51 and the movable mold 52 to the user (S41). As shown in Fig. 14A, an image guidance can represent an operation to be performed by the image guidance using an image. The user detaches the coupling tool 53 according to the guidance using any method, for example, a manual operation (S42). In a case where a device that detaches the coupling tool 53 is used, the user inputs a command of detachment to the device. Next, the injection molding machine 1 determines whether or not the stationary mold 51 and the movable mold 52 are decoupled (S43) . For the determination, the distance meter 95 or the image sensor 96 can be used. The distance meter 95 can measure a distance before the coupling tool 53 is detached and a distance after the coupling tool 53 is detached. The control unit 100 can detect that the coupling tool 53 is detached based on comparison of both distances. The control unit 100 can determine the presence or absence of detachment of the coupling tool 53 basedon comparison of distances acquired at different times or based on comparison of a target distance with an acquired distance. The image sensor 96 can acquire an image before the coupling tool 53 is detached and an image after the coupling tool 53 is detached. The control unit 100 can detect that the coupling tool 53 is detached based on comparison of both images . The control unit 100 can determine the presence or absence of detachment of the coupling tool 53 based on comparison of images acquired at different times or based on the presence or absence of detection of a feature showing the coupling tool 53 in an acquired image. As shown in Fig. 14B, an image alert can represent a content to be warned by the image alert using characters.

In a case where OK determination is made in S43, the injection molding machine 1 presents a guidance for mold clamping to the user (S45). The user touches and selects the "mold clamping" icon of the touch panel 130 according to the guidance (S46). The injection molding machine 1 operates the mold clamping motor 26 according to the input (S47). Next, the injection molding machine 1 determines whether or not desired mold clamping force is obtained (S48). In order to detect the mold clamping force, the strain sensor 93 or the torque sensor 97 can be used. For example, the strain sensor 93 is attached to the tie bar 25, and a strain that occurs in the tie bar 25 at the time of mold clamping is measured. The control unit 100 compares whether or not an output value of the strain sensor 93 exceeds a threshold value, thereby determining whether or not the desired mold clamping force is obtained (S48). Additionally or alternatively, the control unit 100 compares whether or not an output value of the torque sensor 97 that measures torque of the mold clamping motor 26 exceeds a threshold value, thereby determining whether or not the desired mold clamping force is obtained (S48). In a case where NG determination is made in S48, the control unit 100 can present the presence of any trouble to the user through an alert (S49). In a case where OK determination is made in S48, the guidance mode ends. As an option, in a case where OK determination is made in S48, a guidance can also be presented even for an operation to make the cylinder 31 of the injection unit 3 approach the stationary platen 21 of the mold clamping unit 2, and the position of the cylinder 31 can also be determined.

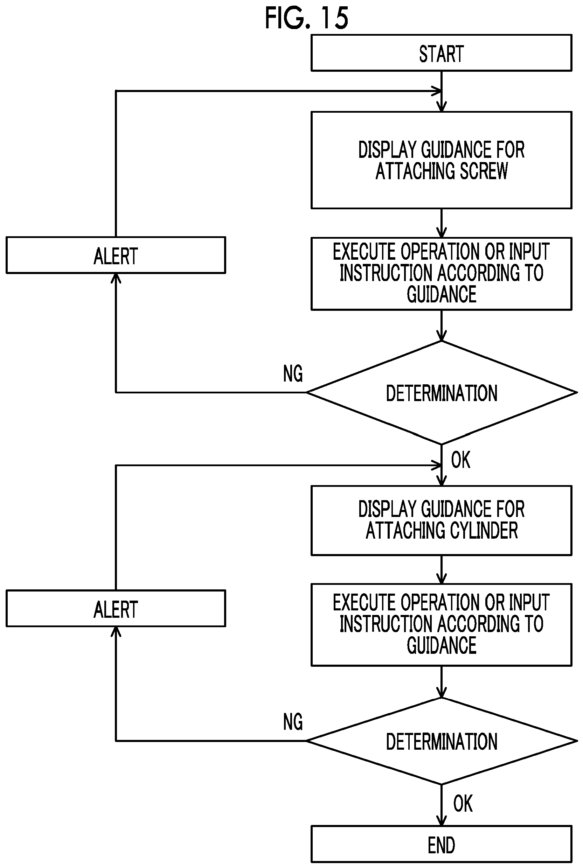

The construction of the injection molding machine 1 is not limited to the attachment of the mold unit 5 to the mold clamping unit 2. As shown in Fig. 15, the construction of the injection molding machine 1 includes a construction operation to attach the screw 32 to an output shaft of the drive unit 34, for example, an output shaft of the first motor 34a, and subsequently, to fix the cylinder 31 to a housing of the drive unit 34 in a maintenance operation of the injection unit 3. Presentation of a guidance, a method of determination, and presentation of an alert can be carried out following the above description, and detailed description on Fig. 16 will be omitted.

Various modifications of the respective embodiments and the respective features can be made by those skilled in the art based on the above-described teaching. The features disclosed in the description are not limited to the injection molding machine, and can be applied to a molding machine, such as a die-casting molding machine. In view of the disclosure of the description, a computer program described in Supplementary Note 1 is also disclosed.

### - Supplementary Note 1 -

A program causing a computer to execute
processing for presenting a plurality of guidances, each of which prompts a user to perform a predetermined operation, in a predetermined order such that a plurality of operations to be performed by the user are performed in a predetermined order in a setup step of a molding machine.

### - Supplementary Note 2 -

The program described in Supplementary Note 1, causing the computer to execute
processing for presenting a first guidance for prompting a first operation included in the plurality of operations to the user,
processing for determining whether or not a first change occurs in the injection molding machine due to the first operation based on an output of one or more sensors, and
processing for presenting a second guidance for prompting a second operation to be performed next to the first operation to the user according to a determination result indicating the first change occurs.

The program is executed by the CPU, for example, the first guidance is displayed on the touch panel 130, subsequently, the control unit 100 performs determination, and when OK determination is made, the second guidance is displayed on the touch panel 130. The guidance is not limited to a still image, and can be video or voice. The setup step of the molding machine is typically a step of attaching a mold to a molding machine, but is not limited thereto. The computer program can be carried in a non-transitory information recording medium, such as an optical disk, a magnetic disk, or any kind of memory.

### Brief Description of the Reference Symbols

- 2:: extruding machine
- 10:: screw
- 11:: front end portion
- 20:: container
- 30:: support member, rectifying member

## Claims

1. An injection molding machine (1) comprising:
a control unit (100),
**characterized in that** the control unit (100) is configured to determine suitability of a change in mechanical structure or mechanical configuration of the molding machine (1) due to an operation performed by a user in a setup step of the molding machine (1) such that the operation is performed as specified, and
the control unit (100) is configured to determine the suitability of the change in the molding machine (1) due to the operation based on an output of one or more sensors (90).

2. The molding machine (1) according to claim 1,
wherein the control unit (100) is configured to present a plurality of guidances, each of which prompts the user to perform a predetermined operation, in a predetermined order such that a plurality of operations are performed in a predetermined order.

3. The molding machine (1) according to claim 2,
wherein the control unit (100) is configured to
present to the user a first guidance for prompting a first operation included in the plurality of operations,
determine whether or not a first change occurs in the molding machine (1) due to the first operation based on an output of one or more sensors (90), and
present to the user a second guidance for prompting the user to perform a second operation to be performed after the first operation according to a determination result indicating that the first change occurs.

4. The molding machine (1) according to claim 3,
wherein the control unit (100) is configured to present an alert to the user according to a determination result indicating that the first change does not occur.

5. The molding machine (1) according to claim 3 or 4,
wherein the control unit (100) is configured to invalidate an input of a command to the molding machine (1) relating to an operation to be prompted by a guidance presented after the first guidance when the user is prompted to perform the first operation by the first guidance.

6. The molding machine (1) according to any one of claims 2 to 5,
wherein the molding machine (1) operates in a guidance mode and a non-guidance mode, and the plurality of guidances are presented in the guidance mode.

7. The molding machine (1) according to claim 1,
wherein the control unit (100) is configured to, at the time of a start of a guidance mode, in which a guidance for prompting a user to perform a predetermined operation is presented, detect a state of the molding machine (1) to be obstructive to the operation prompted by the guidance such that an operation to be performed by the user in a setup step of the molding machine (1) is performed as specified.

8. The molding machine (1) according to claim 7,
wherein the control unit (100) is configured to present an alert to the user according to the detection of the state of the molding machine (1) to be obstructive to the operation prompted by the guidance.

9. The molding machine (1) according to claim 7 or 8,
wherein the control unit (100) is configured to change a state of the molding machine (1) so as to not be obstructive to the operation prompted by the guidance according to the detection of the state of the molding machine (1) to be obstructive to the operation prompted by the guidance.

10. A computer program **characterized by** causing a computer to execute:
processing for determining suitability of a change in mechanical structure or mechanical configuration of an injection molding machine (1) due to an operation performed by a user in a setup step of the molding machine (1) and the operation based on an output of one or more sensors (90) such that the operation is performed as specified.

11. The computer program according to claim 10, causing the computer to execute:
processing for presenting a plurality of guidances, each of which prompts the user to perform a predetermined operation, in a predetermined order such that a plurality of operations are performed in a predetermined order.

12. The computer program according to claim 11, causing the computer to execute:
processing for presenting to the user a first guidance for prompting a first operation included in the plurality of operations;
processing for determining whether or not a first change occurs in the molding machine (1) due to the first operation based on an output of the sensors (90); and
processing for presenting to the user a second guidance for prompting the user to perform a second operation to be performed after the first operation according to a determination result indicating the first change occurs.

13. The computer program according to claim 10, causing a computer to execute:
processing for, at the time of a start of a guidance mode, in which a guidance for prompting a user to perform a predetermined operation is presented, detecting a state of the molding machine (1) to be obstructive to the operation prompted by the guidance such that an operation to be performed by the user in a setup step of the molding machine (1) is performed as specified.

14. A non-transitory information recording medium storing the computer program according to any one of claims 10 to 13.

## Patentansprüche

1. Spritzgießmaschine (1), umfassend:
eine Steuerungseinheit (100),
**dadurch gekennzeichnet, dass**
die Steuerungseinheit (100) konfiguriert ist, Eignung einer Veränderung in mechanischer Struktur oder mechanischer Konfiguration der Spritzgießmaschine (1) aufgrund einer von einem Nutzer durchgeführten Bedienung in einem Einrichtungsschritt der Spritzgießmaschine (1) zu bestimmen, so dass die Bedienung wie vorgegeben durchgeführt wird, und die Steuerungseinheit (100) konfiguriert ist, die Eignung der Veränderung in der Spritzgießmaschine (1) aufgrund der Bedienung basierend auf einer Ausgabe von einem oder mehreren Sensoren (90) zu bestimmen.

2. Spritzgießmaschine (1) nach Anspruch 1,
wobei die Steuerungseinheit (100) konfiguriert ist, mehrere Anleitungen, die den Nutzer jeweils veranlassen, eine vorbestimmte Bedienung durchzuführen, in einer vorbestimmten Reihenfolge aufzuzeigen, so dass mehrere Bedienungen in einer vorbestimmten Reihenfolge durchgeführt werden.

3. Spritzgießmaschine (1) nach Anspruch 2,
wobei die Steuerungseinheit (100) konfiguriert ist, dem Nutzer eine erste Anleitung aufzuzeigen, um eine erste Bedienung zu veranlassen, die in den mehreren Bedienungen umfasst ist,
zu bestimmen, ob aufgrund der ersten Bedienung basierend auf einer Ausgabe von einem oder mehreren Sensoren (90) eine erste Veränderung in der Spritzgießmaschine (1) auftritt oder nicht, und gemäß einem Bestimmungsergebnis, welches das Auftreten der ersten Veränderung anzeigt, dem Nutzer eine zweite Anleitung aufzuzeigen, um den Nutzer aufzufordern, eine zweite Bedienung durchführen, die nach der ersten Bedienung durchgeführt werden soll.

4. Spritzgießmaschine (1) nach Anspruch 3,
wobei die Steuerungseinheit (100) konfiguriert ist, dem Nutzer gemäß einem Bestimmungsergebnis, welches das Nichtauftreten der ersten Veränderung anzeigt, eine Warnung aufzuzeigen.

5. Spritzgießmaschine (1) nach Anspruch 3 oder 4,
wobei die Steuerungseinheit (100) konfiguriert ist, eine Eingabe eines Befehls an die Spritzgießmaschine (1) für ungültig zu erklären, die eine Bedienung betrifft, die von einer Anleitung veranlasst werden soll, die nach der ersten Anleitung aufgezeigt wird, wenn der Nutzer durch die erste Anleitung veranlasst wird, die erste Bedienung durchzuführen.

6. Spritzgießmaschine (1) nach einem der Ansprüche 2 bis 5,
wobei die Spritzgießmaschine (1) in einem Anleitungsmodus und einem Nicht-Anleitungsmodus betrieben wird, und die mehreren Anleitungen in dem Anleitungsmodus aufgezeigt werden.

7. Spritzgießmaschine (1) nach Anspruch 1,
wobei die Steuerungseinheit (100) konfiguriert ist, zum Zeitpunkt eines Starts eines Anleitungsmodus, bei welchem eine Anleitung aufgezeigt wird, um einen Nutzer zum Durchführen einer vorbestimmten Bedienung zu veranlassen, zu detektieren, dass ein Zustand der Spritzgießmaschine (1) für die Bedienung, die von der Anleitung veranlasst wird, hinderlich ist, so dass eine Bedienung, die von dem Nutzer in einem Einrichtungsschritt der Spritzgießmaschine (1) durchgeführt werden soll, wie vorgegeben durchgeführt wird.

8. Spritzgießmaschine (1) nach Anspruch 7,
wobei die Steuerungseinheit (100) konfiguriert ist, gemäß der Detektion, dass der Zustand der Spritzgießmaschine (1) für die Bedienung, die von der Anleitung veranlasst wird, hinderlich ist, dem Nutzer eine Warnung aufzuzeigen.

9. Spritzgießmaschine (1) nach Anspruch 7 oder 8,
wobei die Steuerungseinheit (100) konfiguriert ist, gemäß der Detektion, dass der Zustand der Spritzgießmaschine (1) für die Bedienung, die von der Anleitung veranlasst wird, hinderlich ist, einen Zustand der Spritzgießmaschine (1) zu ändern, so dass er für die Bedienung, die von der Anleitung veranlasst wird, nicht hinderlich ist.

10. Computerprogramm, **dadurch gekennzeichnet, dass** es einen Computer veranlasst zum Ausführen von:
Verarbeiten zum Bestimmen von Eignung einer Veränderung in mechanischer Struktur oder mechanischer Konfiguration einer Spritzgießmaschine (1) aufgrund einer von einem Nutzer durchgeführten Bedienung in einem Einrichtungsschritt der Spritzgießmaschine (1) und der Bedienung basierend auf einer Ausgabe von einem oder mehreren Sensoren (90), so dass die Bedienung wie vorgegeben durchgeführt wird.

11. Computerprogramm nach Anspruch 10, das den Computer veranlasst zum Ausführen von:
Verarbeiten zum Aufzeigen mehrerer Anleitungen, die den Nutzer jeweils veranlassen, eine vorbestimmte Bedienung durchzuführen, in einer vorbestimmten Reihenfolge, so dass mehrere Bedienungen in einer vorbestimmten Reihenfolge durchgeführt werden.

12. Computerprogramm nach Anspruch 11, das den Computer veranlasst zum Ausführen von:
Verarbeiten zum Aufzeigen einer ersten Anleitung für den Nutzer zum Veranlassen einer ersten Bedienung, die in den mehreren Bedienungen umfasst ist;
Verarbeiten zum Bestimmen, ob eine erste Veränderung in der Spritzgießmaschine (1) aufgrund der ersten Bedienung, basierend auf der Ausgabe der Sensoren (90), auftritt oder nicht; und
Verarbeiten zum Aufzeigen einer zweiten Anleitung für den Nutzer, um den Nutzer zu veranlassen, eine zweite Bedienung durchzuführen, die nach der ersten Bedienung durchgeführt werden soll, gemäß einem Bestimmungsergebnis, welches das Auftreten der ersten Veränderung anzeigt.

13. Computerprogramm nach Anspruch 10, das einen Computer veranlasst zum Ausführen von:
Verarbeiten, zum Zeitpunkt eines Starts eines Anleitungsmodus, bei welchem eine Anleitung zum Veranlassen eines Nutzers zum Durchführen einer vorbestimmten Bedienung aufgezeigt wird, zum Detektieren, dass ein Zustand der Spritzgießmaschine (1) hinderlich für die Bedienung ist, die von der Anleitung veranlasst wird, so dass eine Bedienung, die von dem Nutzer in einem Einrichtungsschritt der Spritzgießmaschine (1) durchgeführt wird, wie vorgegeben durchgeführt wird.

14. Nichtflüchtiges Informationsaufzeichnungsmedium, welches das Computerprogramm gemäß einem der Ansprüche 10 bis 13 speichert.

## Revendications

1. Une machine de moulage par injection (1) comprenant :
une unité de commande (100),
**caractérisée en ce que** l'unité de commande (100) est configurée pour déterminer la pertinence d'une modification d'une structure mécanique ou d'une configuration mécanique de la machine de moulage par injection (1) sous l'effet d'une opération mise en œuvre par un utilisateur au cours d'une étape de configuration de la machine de moulage par injection (1), de sorte que l'opération est mise en œuvre tel que spécifié ; et
l'unité de commande (100) est configurée pour déterminer la pertinence de la modification de la machine de moulage par injection (1) sous l'effet de l'opération sur la base d'une sortie d'un ou plusieurs capteurs (90).

2. La machine de moulage par injection (1) selon la revendication 1,
dans laquelle l'unité de commande (100) est configurée pour présenter une pluralité de guidages qui incitent chacun l'utilisateur à mettre en œuvre une opération prédéterminée, dans un ordre prédéterminé, de sorte qu'une pluralité d'opérations est mise en œuvre dans un ordre prédéterminé.

3. La machine de moulage par injection (1) selon la revendication 2,
dans laquelle l'unité de commande (100) est configurée pour :
présenter, à l'utilisateur, un premier guidage visant à inciter une première opération incluse dans la pluralité d'opérations ;
déterminer si une première modification se produit ou non dans la machine de moulage par injection (1) sous l'effet de la première opération sur la base d'une sortie d'un ou plusieurs capteurs (90) ; et
présenter, à l'utilisateur, un second guidage visant à inciter l'utilisateur à mettre en œuvre une seconde opération à mettre en œuvre après la première opération, selon un résultat de détermination indiquant que la première modification se produit.

4. La machine de moulage par injection (1) selon la revendication 3,
dans laquelle l'unité de commande (100) est configurée pour présenter une alerte à l'utilisateur selon un résultat de détermination indiquant que la première modification ne se produit pas.

5. La machine de moulage par injection (1) selon la revendication 3 ou 4,
dans laquelle l'unité de commande (100) est configurée pour invalider une entrée d'une instruction appliquée à la machine de moulage par injection (1), connexe à une opération devant être incitée par un guidage présenté après le premier guidage, lorsque l'utilisateur est incité à mettre en œuvre la première opération par le premier guidage.

6. La machine de moulage par injection (1) selon l'une quelconque des revendications 2 à 5,
dans laquelle la machine de moulage par injection (1) fonctionne dans un mode de guidage et un mode sans guidage, et la pluralité de guidages est présentée dans le mode de guidage.

7. La machine de moulage par injection (1) selon la revendication 1,
dans laquelle l'unité de commande (100) est configurée pour, à l'instant d'un démarrage d'un mode de guidage, dans lequel un guidage visant à inciter un utilisateur à mettre en œuvre une opération prédéterminée est présenté, détecter un état de la machine de moulage par injection (1) comme faisant obstacle à l'opération incitée par le guidage, de sorte qu'une opération devant être mise en œuvre par l'utilisateur dans le cadre d'une étape de configuration de la machine de moulage par injection (1) est mise en œuvre tel que spécifié.

8. La machine de moulage par injection (1) selon la revendication 7,
dans laquelle l'unité de commande (100) est configurée pour présenter une alerte à l'utilisateur selon la détection de l'état de la machine de moulage par injection (1) comme faisant obstacle à l'opération incitée par le guidage.

9. La machine de moulage par injection (1) selon la revendication 7 ou 8,
dans laquelle l'unité de commande (100) est configurée pour modifier un état de la machine de moulage par injection (1) de manière à ne pas faire obstacle à l'opération incitée par le guidage, selon la détection de l'état de la machine de moulage par injection (1) comme faisant obstacle à l'opération incitée par le guidage.

10. Un programme informatique **caractérisé en ce qu'**il amène un ordinateur à exécuter :
un traitement visant à déterminer la pertinence d'une modification d'une structure mécanique ou d'une configuration mécanique d'une machine de moulage par injection (1) sous l'effet d'une opération mise en œuvre par un utilisateur dans le cadre d'une étape de configuration de la machine de moulage par injection (1) et de l'opération, sur la base d'une sortie d'un ou plusieurs capteurs (90), de sorte que l'opération est mise en œuvre tel que spécifié.

11. Le programme informatique selon la revendication 10, amenant l'ordinateur à exécuter :
un traitement visant à présenter une pluralité de guidages qui incitent chacun l'utilisateur à mettre en œuvre une opération prédéterminée, dans un ordre prédéterminé, de sorte qu'une pluralité d'opérations est mise en œuvre dans un ordre prédéterminé.

12. Le programme informatique selon la revendication 11, amenant l'ordinateur à exécuter :
un traitement visant à présenter, à l'utilisateur, un premier guidage visant à inciter une première opération incluse dans la pluralité d'opérations ;
un traitement visant à déterminer si une première modification se produit ou non dans la machine de moulage par injection (1), sous l'effet de la première opération sur la base d'une sortie des capteurs (90) ; et
un traitement visant à présenter, à l'utilisateur, un second guidage visant à inciter l'utilisateur à mettre en œuvre une seconde opération à mettre en œuvre après la première opération, selon un résultat de détermination indiquant que la première modification se produit.

13. Le programme informatique selon la revendication 10, amenant un ordinateur à exécuter :
un traitement visant à, à l'instant d'un démarrage d'un mode de guidage, dans lequel un guidage visant à inciter un utilisateur à mettre en œuvre une opération prédéterminée est présenté, détecter un état de la machine de moulage par injection (1) comme faisant obstacle à l'opération incitée par le guidage, de sorte qu'une opération devant être mise en œuvre par l'utilisateur dans le cadre d'une étape de configuration de la machine de moulage par injection (1) est mise en œuvre tel que spécifié.

14. Un support non transitoire d'enregistrement d'informations stockant le programme informatique selon l'une quelconque des revendications 10 à 13.
